# EUROPÄISCHE PATENTANMELDUNG

(11) **EP 1 892 652 A1**
(43) Veröffentlichungstag der Anmeldung: **27.02.2008**
(21) Anmeldenummer: 06017647.6
(22) Anmeldetag: 24.08.2006
(51) Int. Cl.: G06Q 10/00

(54) **System und Verfahren zur Unterstützung einer Benutzeroberfläche**

(71) Anmelder: SIEMENS AKTIENGESELLSCHAFT, 80333 München (DE)
(72) Erfinder: Jahn, Thomas, 90571 Schwaig (DE); Schulz, Hanno, 68165 Mannheim (DE)

(57) **Zusammenfassung**

Erfindungsgemäß wird ein System mit Anzeigemittel (1) zur hierarchischen Darstellung der Referenzdaten (2) für ein oder mehrere Bausteine eines Automatisierungssystems vorgesehen, wobei die Anzeigemittel (1) als eigenständige Tabelle ausgebildet sind und jeder Baustein durch ein Symbol (3) symbolisiert wird, wobei die Symbole (3) zur einer hierarchischen Baumstruktur zugeordnet und in einer Zeile (4) der Tabelle auf dem Anzeigemittel (1) angezeigt werden, und wobei die zu einem Symbol (3) gehörigen Referenzdaten (2) in derselben Zeile (4) zugleich mit dem Symbol (3) dargestellt werden. Dadurch können die Bausteine und deren Referenzdaten (2) des Automatisierungssystems gleichzeitig hierarchisch dargestellt werden.

## Beschreibung

Die Erfindung betrifft ein System mit einem Anzeigemittel zur Anzeige von Referenzdaten für ein oder mehrere Bausteine, insbesondere Bausteine, die Komponenten eines Automatisierungssystems repräsentieren, wobei jeder Baustein durch ein Symbol auf dem Anzeigemittel symbolisiert wird.

Im Rahmen des Engineering einer Automatisierungslösung werden für bestimmte Funktionen des Engineering-Systems spezielle Bausteine verwendet. Hierbei werden die Bausteine durch verschiedene Symbole (oder Namen) symbolisiert. Üblicherweise werden die Symbole gemäß der Abhängigkeiten der Bausteine untereinander durch eine hierarchische Baumstruktur geordnet und auf einer Anzeige dargestellt, wobei die Abhängigkeit von den entsprechenden Bausteinen untereinander angezeigt werden kann. Durch eine reine hierarchische Strukturierung von Bausteinen hat man jedoch keine Übersicht über die den Bausteinen zugehörigen Referenzdaten und nicht genügend Informationen.

Dahingegen werden die Abhängigkeiten von Bausteinen zu anderen Elementen des Engineering-Systems (z.B.: IO-Adressen, Symbole, weitere Bausteine) als Referenzdaten gewöhnlich flach in einer Querverweisliste (Cross-reference list), also nicht strukturell dargestellt. In einer Querverweisliste werden alle Operanden, Symbole von Bausteinen und die dazugehörigen Referenzen (evtl. gefiltert) tabellarisch aufgelistet. Hierbei kann man aber keine Übersicht über die hierarchische Zuordnung oder die Abhängigkeiten der Bausteine untereinander erhalten.

Die Aufgabe der vorliegenden Erfindung besteht daher darin, die Darstellung der Referenzdaten von Bausteinen eines Automatisierungssystems zu verbessern. Diese Aufgabe wird erfindungsgemäß durch ein System mit den Merkmalen des Anspruchs 1 und ein Verfahren mit den Merkmalen des Anspruchs 5 gelöst. Die Unteransprüche enthalten weitere vorteilhafte Ausführungsformen.

Der Erfindung liegt die Erkenntnis zugrunde, dass neben den hierarchisch zugeordneten Bausteinen ihre zugehörigen Referenzdaten durch eine so genannte Querverweisliste ebenfalls hierarchisch dargestellt werden können. Erfindungsgemäß wird ein System mit einem Anzeigemittel (z.B. Display) zur Anzeige von Referenzdaten für ein oder mehrere Bausteine, insbesondere Bausteine die Komponenten eines Automatisierungssystems repräsentieren, vorgesehen, wobei das Anzeigemittel als eigenständige Tabelle ausgebildet ist. Dabei wird jeder Baustein durch ein Symbol oder einen definierten Namen symbolisiert. Die Symbole werden zu einer hierarchischen Baumstruktur zugeordnet und jeweils in einer Zeile der Tabelle auf dem Anzeigemittel angezeigt. Dabei werden die zu einem Symbol gehörigen Referenzdaten in derselben Zeile zugleich mit dem Symbol dargestellt. Durch die Zusammenführung der hierarchischen Darstellung von den Bausteinen und der tabellarischen Darstellung von den einschlägigen Referenzdaten in einer hierarchischen Querverweisliste ist es möglich, Benutzern eine bessere Übersicht für die Referenzdaten und gleichzeitig mehr Informationen für die Bausteine zu schaffen. In der hierarchischen Darstellung ist zu erkennen, welche Hierarchiestruktur der einzelne Baustein besitzt und welcher Baustein von einem anderen Baustein verwendet oder referenziert wird. Alle Referenzdaten der verwendeten Bausteine lassen sich direkt anzeigen, ob solche Bausteine ggf. geändert oder gelöscht werden müssen. Somit ist eine hohe Sicherheit eines Automatisierungssystems durch schnellstes Auffinden oder Erkennen von Bausteinfehlern möglich.

Zur besseren Übersicht werden die Symbole und die dazugehörigen Referenzdaten in verschiedenen Spalten der Tabelle auf dem Anzeigemittel dargestellt. Wenn die Referenzdaten mehr als zwei - die einzelne Referenz beschreibenden - Datentypen enthalten, wird jeder Datentyp in einer einzelnen Spalte aufgelistet.

Um die Darstellungen auf dem Anzeigemittel ändern oder über entsprechende Objektmanipulationen einen einzelnen Baustein editieren zu können, werden Auswahlmittel (z.B. Computermaus oder Tastatur) zur Auswahl mindestens eines Symbols durch einen Benutzer im System vorgesehen. Die Auswahlmittel werden derart ausgebildet, dass durch eine Eingabe des Benutzers die hierarchische Struktur des Baumes veränderbar ist und/oder die einem Symbol zugehörige Zeile mit den entsprechenden Referenzdaten editierbar ist. Wenn der Benutzer eine Zeile der Querverweisliste bspw. durch eine Computermaus markiert und eine Betätigung durch einen Doppelklick auf die Zeile ausführt, kann der Editor eines entsprechenden Bausteines aufgerufen und an einer entsprechenden Stelle angezeigt werden. Auf diese Weise kann der Benutzer zu der Editorschnittstelle von allen Bausteinen ohne aufwendige Suche springen. Mit einer umfangreichen Querverweisliste ist jede Verknüpfung auffindbar, die für einen Baustein erstellt wurde.

Vorteilhafterweise werden die Verfügbarkeit und/oder der Zustand eines Bausteines des Automatisierungssystems (z.B.: Inkonsistenzen zwischen Baustein und Objekten, zu denen der Baustein Abhängigkeiten besitzt) durch ein zusätzliches Statussymbol (Statusicon) dargestellt. Es ist dann möglich, den Status von Bausteinen anzuzeigen und die Ursache eines fehlerhaften Status der Bausteine durch verschiedene Statussymbole darzustellen, damit kann der Benutzer Inkonsistenzen im Engineering-System sofort erkennen und den hinter einem Baustein stehenden Status erhalten. Somit könnte der Benutzer auf einen Blick nachvollziehen, welcher Baustein von inkonsistenten Referenzen zu welchen Elementen des Engineering-Systems betroffen ist.

Außer dem oben geschilderten System umfasst die Erfindung auch ein Verfahren, mit dem die Funktion des Systems realisiert werden kann.

Die Erfindung wird im Folgenden im Rahmen eines Ausführungsbeispiels anhand der Figur näher erläutert.

Es zeigt:

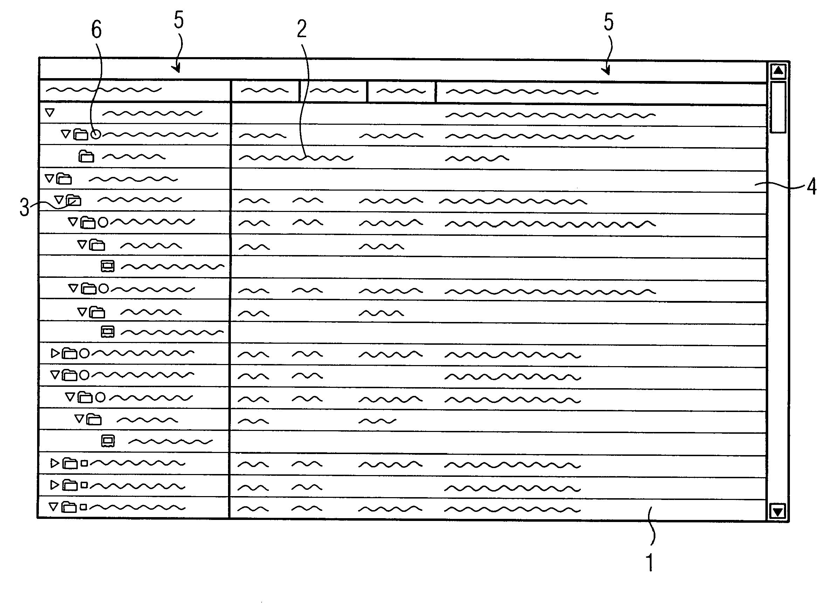

- FIG 1:: ein Beispiel eines erfindungsgemäßen Systems für ein Automatisierungssystem.

In FIG 1 wird beispielsweise ein System mit einem Anzeigemittel 1 zur hierarchischen Darstellung der Referenzdaten 2 für ein oder mehrere Bausteine eines Automatisierungssystems angezeigt, wobei das Anzeigemittel 1, beispielsweise ein Display, als eigenständige Tabelle ausgebildet ist. Beim System wird jeder Baustein durch ein Symbol 2 symbolisiert. In dem linkseitigen Spalte 5 der Tabelle befindet sich ein hierarchischer Baum, zu ihm werden die Symbole 3, die die Bausteine repräsentieren, hierarchisch zugeordnet. Für jedes Symbol 3 erstellt die Tabelle zumindest eine Zeile, in der das Symbol 3 auftritt. Die Symbole 3 werden zu der hierarchischen Baumstruktur zugeordnet und jeweils in einer erstellten Zeile 4 der Tabelle angezeigt. Die zu einem Symbol 3 gehörigen Referenzdaten 2 werden in der gleichen Zeile 4 mit dem Symbol 3 dargestellt. D.h. die Referenzdaten 3 werden mit Hilfe einer Querverweisliste ebenfalls hierarchisch aufgelistet.

Zur besseren Übersicht werden die Symbole 3 und die zu ihnen gehörigen Referenzdaten 2 in verschiedenen Spalten 5 der Tabelle dargestellt. Hier werden die Symbole 3 mit der Baumstruktur in der linksseitigen Spalte 5 visualisiert, während die Referenzdaten 2 rechts daneben in einer anderen Spalte 5 dargestellt werden. Da in diesem Beispiel die Referenzdaten 2 vier Datentypen enthalten, werden die Datentypen getrennt in vier Spalten 5 aufgelistet, also jeder Datentyp in einer einzelnen Spalte 5.

Ein Benutzer des Automatisierungssystems hat die Möglichkeit die Darstellungen für die Bausteine auf dem Display 1 zu ändern bzw. über entsprechende Objektmanipulationen einen einzelnen Baustein zu editieren. Zweckmäßiger Weise werden Auswahlmittel, bspw. eine Computermaus oder Tastatur, zur Auswahl mindestens eines Symbols 3 vorgesehen. Die Auswahlmittel werden so ausgebildet, dass durch eine Eingabe des Benutzers die hierarchische Struktur des Baumes veränderbar bzw. die Bausteine und die Referenzdaten 2 editierbar sind. Wenn der Benutzer eine Zeile 4 der Querverweisliste bspw. durch eine Computermaus markieren und eine Betätigung durch einen Doppelklick auf die Zeile 4 mit Hilfe des Mauscursors ausführt, kann der Editor des entsprechenden Bausteins aufgerufen und angezeigt werden. Auf diese Weise kann der Benutzer zu der Editorschnittstelle von allen Bausteinen ohne aufwendige Suche wechseln.

Zusätzlich werden die Verfügbarkeit und/oder der Zustand eines der oben genannten Bausteine durch ein zusätzliches Statussymbol 6 dargestellt. Dadurch, dass solche Statussymbole 6 im hierarchischen Baum neben den Symbolen 3 angezeigt werden, können vorkommende Inkonsistenzen der Bausteine sofort erkannt werden. Ob ein Baustein aktuell editierbar ist, ist durch das Statussymbol 6 ebenfalls anzeigbar. Es ist auch möglich, die Änderungen der Bausteine durch verschiedene Statussymbole 6 darzustellen, damit kann der Benutzer die Änderungen sofort erkennen und den hinter dem Baustein stehenden Status erhalten.

Durch das geschilderte System können die Benutzer eine bessere Übersicht über die Referenzdaten 2 und mehr Informationen des Automatisierungssystems erhalten. Durch die Zusammenführung der hierarchischen Darstellung von Bausteinen und der tabellarischen Darstellung von den einschlägigen Referenzdaten 2 in einer hierarchischen Querverweisliste ist es möglich, den Benutzern eine bessere Übersicht über das Automatisierungssystem und gleichzeitig mehr Informationen zu verschaffen. Damit kann man leicht erkennen, welche Hierarchiestruktur der Baustein besitzt, welcher Baustein von einem anderen Baustein verwendet oder referenziert wird und welche Referenzen(=Abhängigkeiten) zu anderen Elementen des Engineering-Systems ausgehend vom einzelnen Baustein bestehen.

## Patentansprüche

1. System mit einem Anzeigemittel (1) zur Anzeige von Referenzdaten (2) für ein oder mehrere Bausteine, insbesondere Bausteine, die Komponenten eines Automatisierungssystems repräsentieren,
- wobei jeder Baustein durch ein Symbol (3) symbolisierbar ist,
- wobei das Anzeigemittel (1) als eigenständige Tabelle ausgebildet ist,
- wobei Symbole (3) zu einer hierarchischen Baumstruktur zuordenbar und in einer Zeile (4) der Tabelle auf dem Anzeigemittel (1) anzeigbar sind, und
- wobei die zu einem Symbol (3) gehörigen Referenzdaten (2) in derselben Zeile (4) zugleich mit dem Symbol (3) darstellbar sind.

2. System nach Anspruch 1,
**dadurch gekennzeichnet , dass**
das Symbol (3) und die zu ihm gehörigen Referenzdaten (2) in verschiedenen Spalten (5) der Tabelle darstellbar sind.

3. System nach Anspruch 1 oder 2,
**dadurch gekennzeichnet , dass**
Auswahlmittel zur Auswahl mindestens eines Symbols (2) durch einen Benutzer im System vorgesehen sind, wobei die Auswahlmittel derart ausgebildet sind, dass durch eine Eingabe des Benutzers die hierarchische Struktur des Baumes veränderbar ist und/oder die einem Symbol (3) zugehörige Zeile (4) mit den Referenzdaten (2) editierbar ist.

4. System nach Anspruch 1,
**dadurch gekennzeichnet , dass**
die Verfügbarkeit und/oder der Zustand eines Bausteines des Automatisierungssystems durch ein zusätzliches Statussymbol (6) darstellbar sind.

5. Verfahren zur Anzeige von Referenzdaten (2) für ein oder mehrere Bausteine, insbesondere Bausteine, die Komponenten eines Automatisierungssystems repräsentieren,
- wobei jeder Baustein durch ein Symbol (3) symbolisiert wird,
- wobei ein Anzeigemittel (1) als eigenständige Tabelle ausgebildet wird,
- wobei Symbole (3) zu einer hierarchischen Baumstruktur zugeordnet und in einer Zeile (4) der Tabelle auf dem Anzeigemittel (1) angezeigt werden, und
- wobei die zu einem Symbol (3) gehörigen Referenzdaten (2) in derselben Zeile (4) zugleich mit dem Symbol (3) dargestellt werden.

6. Verfahren nach Anspruch 5,
**dadurch gekennzeichnet , dass**
das Symbol (3) und die zu ihm gehörigen Referenzdaten (2) in verschiednen Spalten (5) der Tabelle dargestellt werden.

7. Verfahren nach Anspruch 5 oder 6,
**dadurch gekennzeichnet , dass**
Auswahlmittel zur Auswahl mindestens eines Symbols (2) durch einen Benutzer im System vorgesehen werden, wobei die Auswahlmittel derart ausgebildet werden, dass durch eine Eingabe des Benutzers die hierarchische Struktur des Baumes veränderbar ist und/oder die einem Symbol (3) zugehörige Zeile (4) mit den Referenzdaten (2) editiert wird.

8. Verfahren nach Anspruch 1,
**dadurch gekennzeichnet , dass**
die Verfügbarkeit und/oder der Zustand eines Bausteines des Automatisierungssystems durch ein zusätzliches Statussymbol (6) dargestellt werden.
